# EUROPEAN PATENT APPLICATION

(11) **EP 4 372 584 A1**
(43) Date of publication of application: **22.05.2024**
(21) Application number: 22208125.9
(22) Date of filing: 17.11.2022
(51) Int. Cl.: G06F 18/25, G06V 10/96, G06V 20/52, G06V 20/56, G06F 18/243

(54) **A METHOD FOR PERFORMING A PERCEPTION TASK OF AN ELECTRONIC DEVICE OR A VEHICLE USING A PLURALITY OF NEURAL NETWORKS**

(71) Applicant: Zenseact AB, 417 56 Göteborg (SE)
(72) Inventor: TONDERSKI, Adam, 426 53 Västra Frölunda (SE); JOHNANDER, Joakim, 587 37 Linköping (SE); PETERSSON, Christoffer, 426 58 Västra Frölunda (SE)
(74) Representative: Zacco Sweden AB

(57) **Abstract**

The present invention related to a computer-implemented method (200) for performing a perception task of an electronic device or a vehicle, using a plurality of neural networks trained to generate a perception output based on an input image, wherein at least two neural networks of the plurality of neural networks are different from each other. The computer-implemented method (200) comprises: for a time instance of a plurality of consecutive time instances: obtaining (S202) an image depicting at least a portion of a surrounding environment of the electronic device or the vehicle at the time instance; processing (S204) the image associated with the time instance by means of a subset of neural network(s) of the plurality of neural networks, thereby obtaining a network output for the time instance; and determining (S206) an aggregated network output by combining (S208) the obtained network output for the time instance with network outputs obtained for a number of preceding time instances, wherein the obtained network output for the time instance and the network outputs obtained for the number of preceding time instances are obtained from different subsets of neural networks of the plurality of neural networks.

## Description

### TECHNICAL FIELD

The disclosed technology relates to methods and systems for performing a perception task, of an electronic device or a vehicle, using a plurality of neural networks trained to generate a perception output based on an input image.

### BACKGROUND

Deep neural networks (DNNs) are today used in many different fields of technology. The DNN's ability to identify and analyze complex relationships in data has made them suitable for automation of different tasks. In this capacity, DNNs has for instance found many useful functions within the field of computer vision, such as object detection and classification tasks. More specifically, the DNNs can be used for allowing computers to obtain a high-level understanding from digital images or video in order to form their perception the world around them. Examples of such applications are autonomous driving or control systems which can be implemented e.g. in vehicles or robots, and augmented reality applications.

While improved accuracy and robustness of DNNs are constantly sought after, a trade-off between the complexity (e.g. in terms of size and network architecture) and computational efficiency (e.g. in terms of execution time, memory and processing power requirements) has to be made. One solution dealing with the former aspect is so called ensemble networks.

Ensemble networks utilizes an ensemble of different DNNs to obtain an improved accuracy and robustness. More specifically, instead of just using a single DNN for a specific task, the input is fed through the ensemble of DNNs, and a combined output is formed from the individual outputs of the DNNs.

However, this way of implementing ensemble networks naturally leads to longer execution times, as well as requiring more computational power. Thus, it makes them unsuitable for applications where the DNNs are to be run on a continuous feed of input data in real-time. It also makes them unsuitable for being run on resource-limited hardware. There is therefore a need for new and improved solutions for performing perception tasks.

### SUMMARY

The herein disclosed technology seeks to mitigate, alleviate, or eliminate one or more of the above-identified deficiencies and disadvantages in the prior art to address various problems relating to deployment and execution of neural networks.

The inventors have realized a new and improved way of utilizing ensembles of neural networks to achieve improved performance without significantly affecting the computational time or efficiency. Instead of executing each ensemble member at every time instance when new sensor data arrives, the inventors proposes a new rotating scheme of distributing the ensemble members over a number of subsequent time instances such that only one (or a subset) of the ensemble members have to be executed each time instance.

Various aspects and embodiments of the disclosed invention are defined below and in the accompanying independent and dependent claims.

According to a first aspect of the disclosed technology, there is provided a computer-implemented method for performing a perception task, of an electronic device or a vehicle, using a plurality of neural networks, trained to generate a perception output based on an input image. At least two neural networks of the plurality of neural networks are different from each other. The computer-implemented method comprises, for a time instance of a plurality of consecutive time instances: obtaining an image depicting at least a portion of a surrounding environment of the electronic device or the vehicle at the time instance; processing the image associated with the time instance by means of a subset of neural network(s) of the plurality of neural networks, thereby obtaining a network output for the time instance; and determining an aggregated network output by combining the obtained network output for the time instance with network outputs obtained for a number of preceding time instances, wherein the obtained network output for the time instance and the network outputs obtained for the number of preceding time instances are obtained from different subsets of neural networks of the plurality of neural networks.

The presently disclosed technology provides for a way of rotating the neural networks of a plurality of neural networks (e.g. an ensemble network) over different images at each time instance. A possible associated advantage of the disclosed technology is that the benefits of ensemble networks can be achieved (e.g. potential accuracy and robustness compared to using a single neural network) while maintaining the same or similar execution time as if a single neural network had been used. This may in particular be advantageous in application where the perception task is performed in real time (e.g. on a video feed), since the execution time of a time instance is similar to using a single neural network. It may further facilitate implementation of algorithms for such perception task in devices having limited hardware resources.

Another advantage of some embodiments is that a subsequent task (e.g. performing a filtering or object tracking algorithm) may be performed with improved accuracy and robustness since the output of the different neural networks over time can be expected to be more independent than the outputs of a single neural network applied to every image.

Yet another advantage of some embodiments is that the accuracy and robustness of subsequent behavior and motion prediction tasks may be improved as the aggregated network output may further promote diversity in their predictions.

According to a second aspect of the disclosed technology, there is provided a non-transitory computer-readable storage medium. The non-transitory computer-readable storage medium stores one or more programs configured to be executed by one or more processors of a processing system, the one or more programs comprising instructions for performing the method according to the first aspect.

With this second aspect of the disclosed technology, similar advantages and preferred features are present as in the other aspects. In order to avoid undue repetition, reference is made to the above.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect of the disclosed technology, there is provided an apparatus for performing a perception task, of an electronic device or a vehicle, using a plurality of neural networks trained to generate a perception output based on an input image. At least two neural network of the plurality of neural networks are different from each other. The apparatus comprises control circuitry configured to, for a time instance of a plurality of consecutive time instances: obtain an image depicting at least a portion of a surrounding environment of the electronic device or the vehicle at the time instance; process the image associated with the time instance by means of a subset of neural network(s) of the plurality of neural networks, thereby obtaining a network output for the time instance; and determine an aggregated network output by combining the obtained network output for the time instance with network outputs obtained for a number of preceding time instances, wherein the obtained network output for the time instance and the network outputs obtained for the number of preceding time instances are obtained from different subsets of neural networks of the plurality of neural networks.

With this third aspect of the disclosed technology, similar advantages and preferred features are present as in the other aspects. In order to avoid undue repetition, reference is made to the above.

According to a fourth aspect of the disclosed technology, there is provided an electronic device. The electronic device comprises: an image capturing device configured to capture an image depicting at least a portion of a surrounding environment of the electronic device; and an apparatus according to the third aspect, for performing a perception task of the electronic device.

With this fourth aspect of the disclosed technology, similar advantages and preferred features are present as in the other aspects. In order to avoid undue repetition, reference is made to the above.

According to a fifth aspect of the disclosed technology, there is provided a vehicle. The vehicle comprises: an image capturing device configured to capture an image depicting at least a portion of a surrounding environment of the vehicle; and an apparatus according to the third aspect, for performing a perception task of the vehicle.

With this fifth aspect of the disclosed technology, similar advantages and preferred features are present as in the other aspects. In order to avoid undue repetition, reference is made to the above.

According to a sixth aspect of the disclosed technology, there is provided a computer program product comprising instructions which, when the program is executed by a computing device, causes the computer to carry out the method according to any one of the embodiments disclosed herein. With this aspect of the invention, similar advantages and preferred features are present as in the other aspects of the invention. In order to avoid undue repetition, reference is made to the above.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter. A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 schematically illustrates an ensemble network according to prior art.
Figure 2 is a schematic flow chart representation of a computer-implemented method for performing a perception task, of an electronic device or a vehicle, in accordance with some embodiments.
Figure 3 is a schematic illustration of an apparatus for performing a perception task, of an electronic device or a vehicle, in accordance with some embodiments.
Figure 4 is a schematic illustration of an electronic device in accordance with some embodiments.
Figure 5 schematically illustrates a vehicle in accordance with some embodiments.
Figure 6A to 6C illustrates, by way of example, different ways of implementing ensemble networks in accordance with some embodiments of the presently disclosed technology.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

The technology of the present disclosure relates to the implementation of so called ensemble networks, or ensembles of neural networks. The process of using ensemble networks generally involves training a plurality of neural networks on a training dataset, then using each of the trained networks to make a prediction of an input before combining the predictions in some way to make a final outcome or prediction.

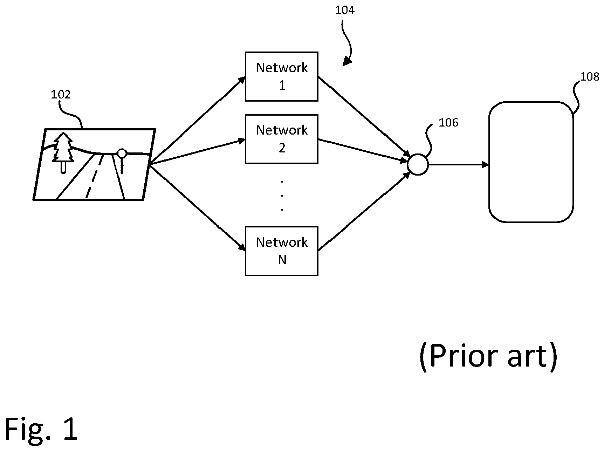

Figure 1 schematically illustrates an example of how an ensemble of networks 104 is generally implemented for an image classification task, in accordance with what is known today. The ensemble of networks herein comprises a number of neural networks 1 to N. The input consist of an input image 102 which is fed through each of the neural networks 1 to N. The outputs of each neural network are then combined into a combined output 106 which can then be used for any subsequent task 108. By combining the output from multiple neural networks, instead of using just a single neural network, one may reduce the variance in the output, and thus provide a model which is more robust against variations in the input data, specifics in the training scheme etc. However, as each of the neural networks of the ensemble has to be executed, the execution time, as well as the computational cost, increases with each neural network of the ensemble network.

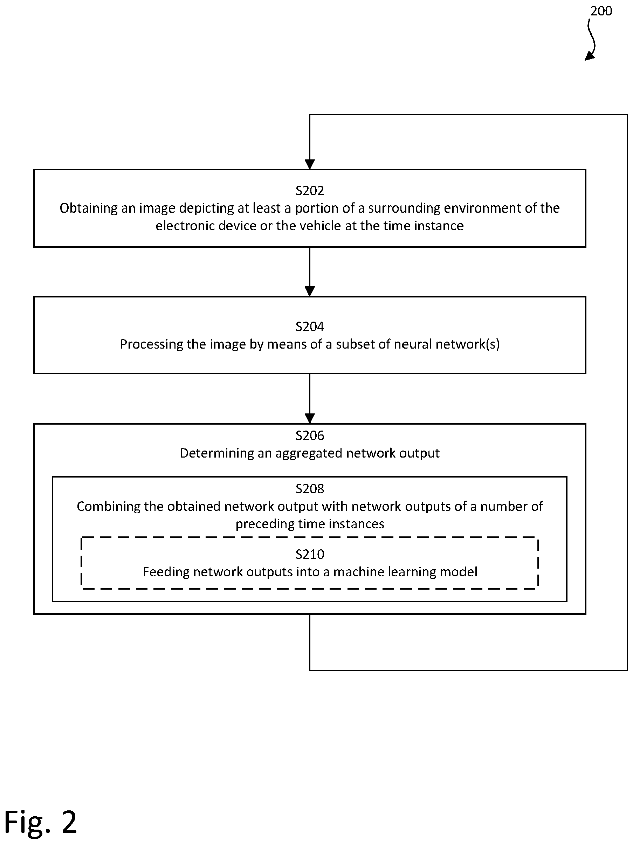

Figure 2 is a flow chart illustrating the steps of a variant of the method 200 for performing a perception task of an electronic device or a vehicle. Fig. 2 also shows a number of optional steps (indicated by broken lines) of the method 200 forming a number of alternative variants of the method 200.

The presently disclosed method may perform a perception task of a vehicle. For example, the vehicle may be any road vehicle such as a car, a motorcycle, a (cargo) truck, a bus, a smart bicycle, etc. Alternatively, the vehicle may be a surface vessel (e.g. a boat, a ship, etc.) or an aircraft (e.g. an airplane, a drone, a helicopter, etc.). In particular, the vehicle may be an autonomous vehicle. The perception task may for instance be performed as part of an automated driving system (ADS) of the vehicle. The wording "autonomous vehicle" should herein be construed as any vehicle which utilizes a perception of its surrounding environment for any functions or operations of the vehicle. For example, the vehicle may be a fully autonomous vehicle, a semi-autonomous (e.g. having an advanced driver-assisting function), or anything in between.

The presently disclosed method may perform a perception task of an electronic device. The electronic device may for instance be a handheld or portable electronic device (e.g. a smartphone, tablet, headset etc.) for performing e.g. augmented or virtual reality applications. As another example, the electronic device may be part of a surveillance or entry system where e.g. face recognition or object detection is performed. As yet another example, the electronic device may be part of an automated production or assembly line where e.g. computer vision is used to control industrial robots. As is readily understood by the skilled person, the electronic device may form part of other applications as well, as it is not limited to the examples above.

The wording "perception task" should be interpreted broadly as any way of allowing the electronic device or the vehicle to get an understanding of its physical environment, e.g. by interpreting sensory data. In other words, the perception task may enable the electronic device or the vehicle to perceive the world around it, similar to the way humans do by using their senses. More specifically, the perception task herein refers to a perception task which is performed using neural networks. In, particular, the perception task is performed using a plurality of neural networks (also referred to as an ensemble of networks or ensemble network) trained to generate a perception output based on an input image. The perception task may be any one or more of an object detection task, an object classification task, an image classification task, an object recognition task, a free-space estimation task, an object-tracking task and an image segmentation task. Further, the image segmentation task may be either a semantic segmentation or an instance segmentation. In particular, the method 200 may be advantageous in application where the perception task is performed in real-time on a continuous stream of images, e.g. a video feed, of the surrounding environment, since the presently disclosed technology facilitates a computational efficient way of processing images, especially when there is a relatively small change between two consecutive images.

The perception output may be a numeric output. The numeric output may be either continuous or discrete values. The perception output may for instance be a confidence score of an object in the image belonging to a certain class. As another example, the perception output may be a label of a classification of the image. As yet another example, the perception output may be a segmentation of the input image.

At least two neural networks of the plurality of neural networks are different from each other. This may be to ensure that the method takes advantage of an ensemble of networks which can give different outputs. By having different neural networks, the results of the perception task can be improved. It may further be advantageous to have different neural networks specialized at different scenarios. In some embodiments, each neural network of the plurality of neural networks is different from each other. The neural networks of the plurality of neural networks may differ in one or more different ways. As an example, the neural networks may have different network weights. As another example, the neural networks of the plurality of neural networks may be trained differently from each other. The neural networks may e.g. be trained using different training data sets, using different pre-processing steps on the training data (e.g. data augmentation, such as rotation, cropping and/or re-scaling of the training data), using different hyper parameters (e.g. loss function, weight initialization, learning rate, batch size) during the training process, or by using different stochastic depths. The neural networks of the plurality of neural networks may have a same network architecture. In such case, the neural networks of the plurality of neural networks may differ in some other way as explained above. It should be noted that by having the same network architecture should be interpreted as having generally the same network architecture. The neural networks of the plurality of neural networks may have different network architectures. In case the neural networks differs in network architecture to any extent, they may advantageously have a same execution time or similar (i.e. within a certain tolerance) execution time. The neural networks may for instance have different network architectures, but a same or similar number and/or types of operations to achieve a same or similar runtime latency. A possible associated advantage of having similar execution time may be that it simplifies allocation of computational resources during the different time instances since it can take more or less the same amount of time and resources regardless of which neural network of the ensemble is executed.

In another example, the neural networks of the plurality of neural networks may be different versions of the same neural network. More specifically, the neural networks may be the same neural network but at different intermediate stages of the training of the neural network. Put differently, the neural networks may be different snapshots or checkpoints of the same neural network at different time points during the training. This may be advantageous in that it provides for a faster and less expensive (e.g. in terms of computational resources) training process compared to having to train a number of neural networks individually, while still enjoying the advantages of having an ensemble of different neural networks.

In yet another example, the neural networks of the plurality of neural networks may be represented by a single neural network. To achieve different neural networks between time instances, one or more dropout layers with different parameters may be added to the neural network at each time instance. This may be equated to sampling a random ensemble member from a group of equivalent neural networks at each time instance. This may be implemented by changing layers of the neural network in each time instance which may have an advantageous effect on the memory requirements and training process. Alternatively, the different versions of the same neural network can be stored and accessible when to be executed.

As stated above, the perception task is related to the perception of the electronic device or the vehicle. Thus, by the wording "of an electronic device or a vehicle" as in "performing a perception task of an electronic device or a vehicle" it is herein meant that the perception task is a task of perceiving the surrounding environment of the electronic device or the vehicle. The method 200 may be performed in or by the electronic device or the vehicle. However, the method 200 may be performed by another device or apparatus, such as a remote server, on behalf of the electronic device or the vehicle.

In the following, the different steps are described in more detail with reference to Fig. 2. Even though illustrated in a specific order, the steps of the method 200 may be performed in any suitable order, in parallel, as well as multiple times. The steps of the method 200 described below is performed for a time instance of a plurality of time instances. It goes without saying that the method 200 may be performed for a number of consecutive time instances, i.e. for one or more of the plurality of time instances. Each time instance may correspond to a rate at which new images are obtained. For instance, the method 200 may be performed on a video feed of the surrounding environment. Thus, the time instances may correspond to a frame rate of a camera used to capture the image. More specifically, a spacing between each time instance of the sequence of consecutive time instances may correspond to a frame rate of an image capturing device used to capture the images. For example, if the image capturing device (e.g. a camera) has a frame rate of 10 frames per second, the time instances may be spaced by a tenth of a second. It should however be noted than not every frame need to be processed by the method. As an example, every fifth frame captured by the image capturing device may be used. It should further be noted that the steps described below need not to be performed at/within the time instance referred to. Instead, it should be understood as the steps are performed for the time instance, i.e. in response to obtaining or receiving the image depicting the surrounding environment at the time instance.

An image depicting at least a portion of a surrounding environment of the electronic device or the vehicle at the time instance is obtained S202. It should be noted that by the wording "the electronic device or the vehicle" should herein be construed as referring to either the electronic device or the vehicle depending on the application. For example, if the method is performed for an electronic device, the obtained image depicts at least a portion of the surrounding environment of the electronic device and vice versa. The image may be obtained from an image capturing device of the electronic device or the vehicle. The image capturing device may comprise one or more of an image sensor (e.g. a camera), a LIDAR, and a RADAR. The image should be seen as any data indicative of the surrounding environment of the electronic device or the vehicle at the time of the current time instance. The image may for example be an image captured by a camera, a RADAR or LIDAR image (e.g. as a point-cloud, range image or bird eye view (BEV) representation). The image may comprise more than one type of sensory data. For example, the image may be an image captured by a camera in combination with a point-cloud of the environment as determined by a LIDAR. The image may in such case be a fusion of the image captured by the camera and the point-cloud determined by the LIDAR. Alternatively, a neural network (further described below) may be a fusion network configured to take both the image captured by the camera and the point-cloud determined by the LIDAR as two separate inputs. Optionally, the image is further associated with additional sensor data about the electronic device or the vehicle itself, or its surroundings. The additional sensor data may for instance be information about operating conditions of the electronic device or the vehicle, positional data of the electronic device or the vehicle such as map data, etc.

The term "obtaining" is to, throughout the present disclosure, be interpreted broadly and encompasses receiving, retrieving, collecting, acquiring, and so forth directly and/or indirectly between two entities configured to be in communication with each other or further with other external entities.

The surrounding environment of the electronic device or the vehicle can be understood as a general area around the electronic device or the vehicle in which objects (such as other electronic devices or vehicles, landmarks, obstacles, persons, etc.) can be detected and identified by sensors (radar, LIDAR, cameras, etc.) of the electronic device or the vehicle, i.e. within a sensor range of the electronic device or the vehicle.

The depicted portion of the surrounding environment may correspond to a field of view of the image capturing device. Alternatively, the depicted portion may be a cropped portion of the image. The cropped portion may comprise a region of interest of the image, such as an object to be tracked or classified.

The obtained image may be a single image. Alternatively, the image may comprise a plurality of images. The plurality of images may be provided either as individual images to the plurality of neural networks, or as a fused image formed by merging the plurality of images into one. In case the image comprises a plurality of images, each image may depict a different portion of the surrounding environment of the electronic device or the vehicle. Further, the images of the plurality of images may be captured using a number of sensors (e.g. cameras) having different fields of view. As an example, an object of interest may be partly depicted in one image, while the rest is depicted in another image. In such case, a fused image of the two may facilitate an improved performance of the perception task. It should be further noted that images obtained for different time instances may be captured using different sensors (e.g. different cameras). For example, in a first time instance, an object of interest may be in the field of view of a first camera. In a subsequent time instance, the same object of interest may be in the field of view of a second camera. The obtained image for these two time instances may thus be cropped portions of the same object but from images captured by different cameras.

Further, the image may be formed by a series of sub-images captured at a series of sub-frames. For example, in case the image is a point-cloud determined by a LIDAR, the image may be formed by aggregating a series of preceding point-clouds and then feed the aggregated point-cloud into the neural network.

Moving on, the image associated with the time instance is processed S204 by means of a subset of neural network(s) of the plurality of neural networks, thereby obtaining a network output for the time instance. Put differently, the image of the current time instance may be fed into each neural network of the subset of neural networks(s). Thereby a network output of the subset of neural network(s) is obtained. The obtained network output may be one or more network outputs. In other words, the obtained network output may be a single aggregated network output of the neural networks of the subset of neural networks. Alternatively, the obtained network output may comprise the network outputs of the neural networks of the subset individually.

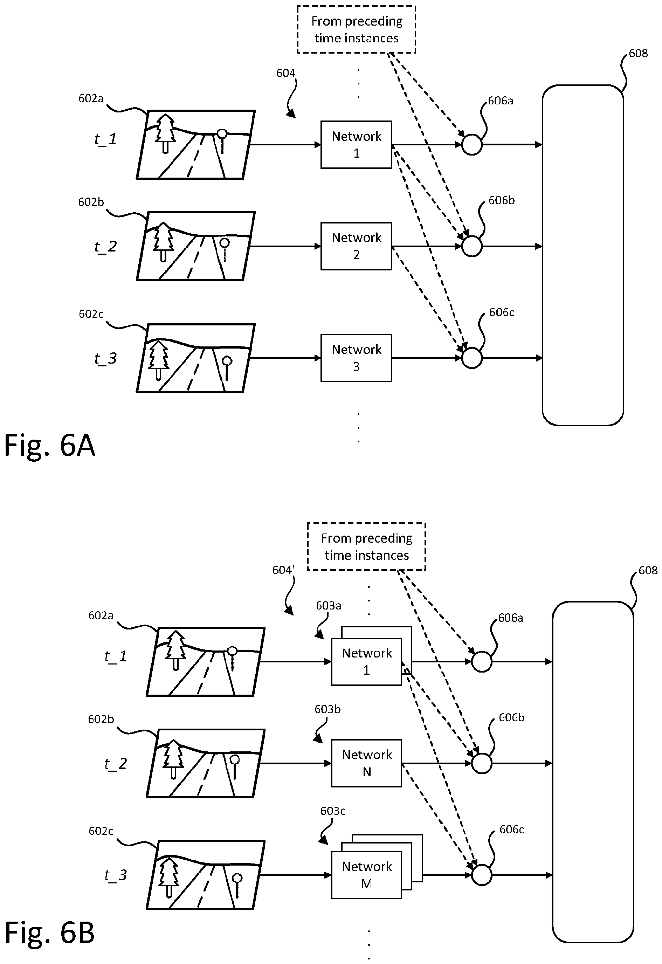

In one example, the subset of neural network(s) consist of one neural network of the plurality of neural network. Thus, the network output is, in this example, a single network output. This example is further discussed in connection with Fig. 6A.

In another example, the subset of neural network(s) may comprise two or more of the plurality of neural networks. The subset of neural networks may comprise two or more neural networks of the plurality of neural networks, but not all of the plurality of neural networks. In the case of two or more neural networks, the network output of the subset may be a combination of the output of each neural network of the subset of neural networks. Put differently, the network output of the subset of neural network(s) may be an aggregated sub-network output of the two or more neural network(s) of the set of neural network(s). The aggregated sub-network output may be determined in a same way as an aggregated network output as further discussed below. Thus, the network output may be a single aggregated sub-network output as described above. Alternatively, the network output may comprise the network outputs of each of the neural networks of the subset individually. Hence, in this example, the obtained network output comprises a plurality of network outputs. The example of having subsets of two or more neural networks is further discussed in connection with Fig. 6B.

Moving on, an aggregated network output is determined S206 by combining S208 the obtained network output for the time instance with network outputs obtained for a number of preceding time instances. The time instance referring to the obtained image may also be referred to as the "current time instance" in order to distinguish it from the preceding time instances. The obtained network output for the time instance and the network outputs obtained for the number of preceding time instances are obtained from different subsets of neural networks of the plurality of neural networks. It should be noted that the obtained network output for the time instance and the network outputs obtained for the number of preceding time instances are obtained from processing different images. Put differently, each network output is obtained from a respective image depicting at least a portion of a surrounding environment of the electronic device or the vehicle at the corresponding time instance. The subsets of neural networks may differ in that no two subsets comprises a same neural network. In other words, each subset may comprise different neural networks of the plurality of neural networks. In another example, where two or more of the subsets comprises two or more neural networks, no two subsets may comprise the same set of neural networks. In other words, each subset may comprise a different combination of neural networks. The subsets of neural networks used to determine the aggregated network output may all be different from each other. Alternatively, at least two of the subsets may be different from each other.

The aggregated network output may be an average of the obtained network output for the time instance and the network outputs obtained for the number of preceding time instances. Put differently, determining S206 the aggregated network output may comprise determining an average of the obtained network output for the time instance and the network outputs obtained for the number of preceding time instances. As a non-limiting example, if the neural networks outputs a confidence score of an object depicted in an image belongs to a certain class, the aggregated network output may be an average value of the confidence scores of the obtained network output for the time instance and the network outputs obtained for the number of preceding time instances. The aggregated network output may be a weighted average of the obtained network output for the time instance and the network outputs obtained for the number of preceding time instances. Put differently, determining S206 the aggregated network output may comprise determining a weighted average of the obtained network output for the time instance and the network outputs obtained for the number of preceding time instances. The weights may allow for different subsets of neural networks to have smaller or greater influence on the aggregated network output. The value of the weights may be based on a set of rules. For example, a certain neural network or subset of neural networks may be given a higher weight depending on the scenario of the image. A neural network of the plurality of neural networks may for instance be specially trained for detecting and classifying road signs. That neural network may then be given a higher weight when it comes to determining the presence of road signs in the image than another neural network which may be trained as a more general object detector/classifier. In another example, if two or more neural networks (or subsets of neural networks) has the same or similar prediction, those networks may be assigned a higher weight than e.g. a network which gives a diverging prediction. The aggregated network output may be determined by exponential averaging, i.e. where the network outputs of the preceding time instances are given lower weights the less recent the time instance is. In other words, the older the network output is, the less influence over the aggregated network output it is given. Alternatively, the aggregated network output may be determined by a weighted moving average. In other words, the aggregated network output may be determined by a weighted average of a fixed number of preceding network outputs, and where each network output is given a weight depending on how recent it is. The values of the network outputs that are averaged may be the outputted scores of each neural networks prior to or after a final soft-max layer. Another way to aggregate the network outputs may be to utilize techniques relating to Bayesian statistics or sensor fusion. For example, a way of aggregating the network outputs may be to assume a prior probability distribution and use the network outputs - each interpreted as a data point - to compute a posterior probability distribution.

Combining S208 the obtained network output for the time instance with the network outputs obtained for the number of preceding time instances may comprise feeding S210 the obtained network output for the time instance and the network outputs obtained from the number of preceding time instances into a machine learning model configured to output the aggregated network output. In other words, a machine learning model may be used in determining the aggregated network output.

The number of preceding time instances may be based on a number of neural networks of the plurality of neural networks. In particular, the number of preceding time instances may be such that the aggregated network output is formed by a network output from each neural network of the plurality of neural networks. As an example, if the plurality of neural networks comprises 10 neural networks, the number of preceding time instances may be 9, such that the aggregated network output is formed by combining the current time instance with the 9 preceding time instances. Alternatively, the number of preceding time instances may be based on a number of subsets of neural network(s) of the plurality of neural networks. Similarly to the above example, the number of preceding time instances may be such that the aggregated network output if formed by a network output from each subset of neural networks. How the aggregated network output can be formed in relation to the number of preceding time instances is further described below in connection with Fig. 6A to 6C.

The individual neural networks (i.e. the ensemble members) may be seen as performing an intermediate perception task (e.g. object detection). The outputs may then be combined (i.e. into the aggregated network output) and be used in a subsequent task where it is fed into an algorithm or subsequent neural network. For example, the aggregated network output may be used in a tracking or filtering algorithm or a behavior or motion prediction.

Executable instructions for performing these functions are, optionally, included in a non-transitory computer-readable storage medium or other computer program product configured for execution by one or more processors.

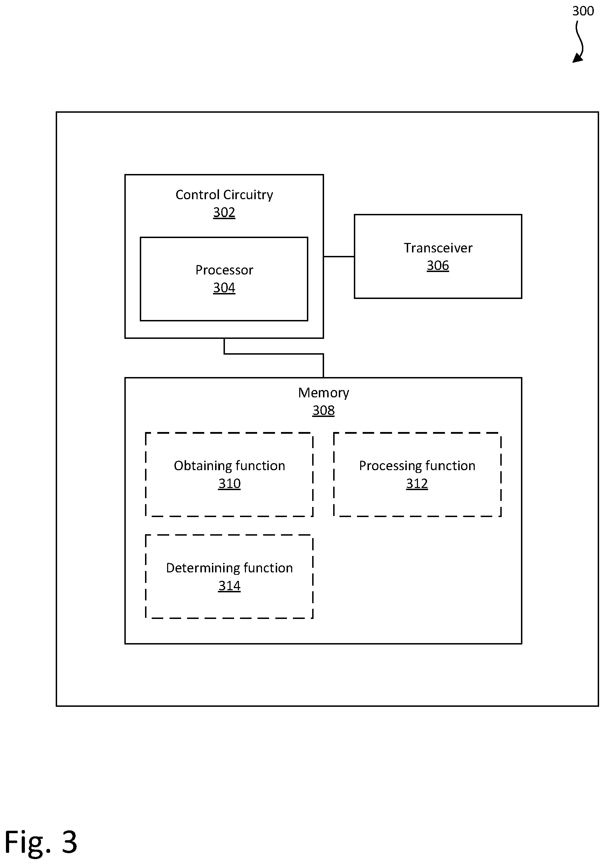

Figure 3 is a schematic illustration of an apparatus 300 for performing a perception task, of an electronic device or a vehicle. The perception task is performed using a plurality of neural networks trained to generate a perception output based on an input image, wherein at least two neural network of the plurality of neural networks are different from each other.

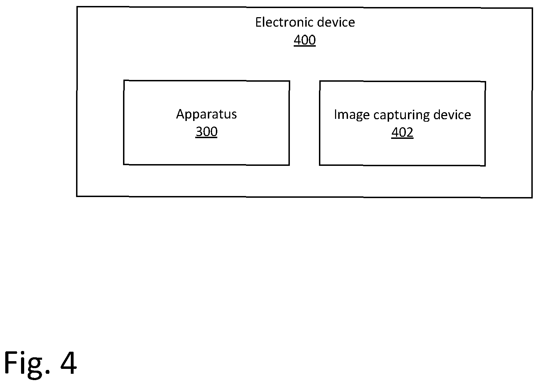

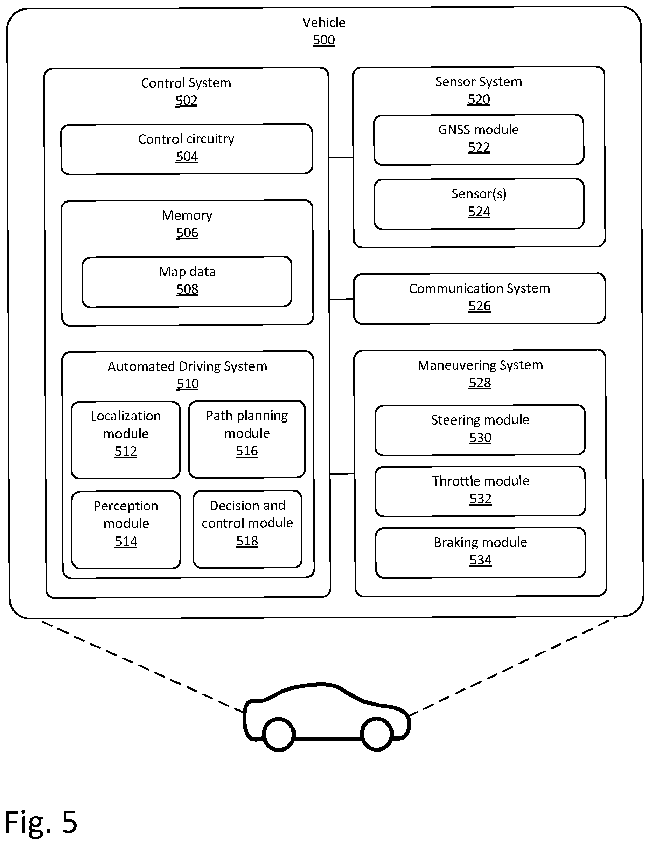

In particular, the apparatus 300 is configured to perform the techniques described in the foregoing with reference to Fig. 2. The apparatus 300 may be provided locally in the electronic device or the vehicle. However, as can be readily understood, the apparatus 300 may be provided as an external device or unit to the electronic device or the vehicle, such as a remote server. In such case, the apparatus 300 may be communicatively connected to the electronic device or the vehicle. An example of an electronic device is further described below in connection with Fig. 4. An example of a vehicle is further described below in connection with Fig. 5.

The apparatus 300 comprises control circuitry 302. The control circuitry 302 may physically comprise one single circuitry device. Alternatively, the control circuitry 302 may be distributed over several circuitry devices. As an example, the apparatus 300 may share its control circuitry 302 with other parts of the electronic device or the vehicle, such as a control system of the electronic device or the vehicle.

As shown in the example of Fig. 3, the apparatus 300 may further comprise a transceiver 306 and a memory 308. The control circuitry 302 being communicatively connected to the transceiver 306 and the memory 308. The control circuitry 302 may comprise a data bus, and the control circuitry 302 may communicate with the transceiver 306 and/or the memory 308 via the data bus.

The control circuitry 302 may be configured to carry out overall control of functions and operations of the apparatus 300. The control circuitry 302 may include a processor 304, such as a central processing unit (CPU), microcontroller, or microprocessor. The processor 304 may be configured to execute program code stored in the memory 308, in order to carry out functions and operations of the apparatus 300. The control circuitry 302 is configured to perform the steps of the method 200 as described above in connection with Fig. 2. The steps may be implemented in one or more functions stored in the memory 308. The control circuitry 302 may be configured to execute an obtaining function 310, a processing function 312 and a determining function 314. It should be noted that the various function and operation of the apparatus 300 may be implemented in additional functions than those described herein. In addition, one or more of the above functions may be implemented together in a common function.

The transceiver 306 may be configured to enable the apparatus 300 to communicate with other devices. The transceiver 306 may both transmit data from and receive data to the apparatus 300. For example, the apparatus 300 may collect data from an image capturing device arranged to capture the image depicting at least a portion of a surrounding environment of the electronic device. Further, the apparatus 300 may transmit data to the electronic device, such as an aggregated network output (as further described below). Even though not explicitly illustrated in Fig. 3, the apparatus 300 may comprise user input devices such as one or more of a keyboard, a mouse, and a touchscreen.

The memory 308 may be a non-transitory computer-readable storage medium. The memory 308 may be one or more of a buffer, a flash memory, a hard drive, a removable media, a volatile memory, a non-volatile memory, a random access memory (RAM), or another suitable device. In a typical arrangement, the memory 308 may include a non-volatile memory for long term data storage and a volatile memory that functions as system memory for the apparatus 300. The memory 308 may exchange data with the circuitry 302 over the data bus. Accompanying control lines and an address bus between the memory 308 and the circuitry 302 also may be present.

Functions and operations of the apparatus 300 may be implemented in the form of executable logic routines (e.g., lines of code, software programs, etc.) that are stored on a non-transitory computer readable recording medium (e.g., the memory 308) of the apparatus 300 and are executed by the circuitry 302 (e.g. using the processor 304). Put differently, when it is stated that the circuitry 302 is configured to execute a specific function, the processor 304 of the circuitry 302 may be configured execute program code portions stored on the memory 308, wherein the stored program code portions correspond to the specific function. Furthermore, the functions and operations of the circuitry 302 may be a stand-alone software application or form a part of a software application that carries out additional tasks related to the circuitry 302. The described functions and operations may be considered a method that the corresponding device is configured to carry out, such as the method 200 discussed above in connection with Fig. 2. Also, while the described functions and operations may be implemented in software, such functionality may as well be carried out via dedicated hardware or firmware, or some combination of one or more of hardware, firmware, and software.

In the following, the function and operations of the apparatus 300 is described. It should be noted that the control circuitry 302 is configured to execute the following functions and operations for a time instance of a plurality of time instances. In other words, the below describes what actions the control circuitry may perform for one of the time instances. The corresponding actions may also be performed for any other time instance of the plurality of time instances.

The control circuitry 302 is configured to obtain an image depicting at least a portion of a surrounding environment of the electronic device or the vehicle at the time instance. This may be performed e.g. by execution of the obtaining function 310.

The control circuitry 302 is further configured to process the image associated with the time instance by means of a subset of neural network(s) of the plurality of neural networks, thereby obtaining a network output for the time instance. This may be performed e.g. by execution of the processing function 312.

The control circuitry 302 is further configured to determine an aggregated network output by combining the obtained network output for the time instance with network outputs obtained for a number of preceding time instances, wherein the obtained network output for the time instance and the network outputs obtained for the number of preceding time instances are obtained from different subsets of neural networks of the plurality of neural networks. This may be performed e.g. by execution of the determining function 314. Combining the obtained network output for the time instance with the network outputs obtained for the number of preceding time instances may comprise feeding the obtained network output for the time instance and the network outputs obtained from the number of preceding time instances into a machine-learning model configured to output the aggregated network output.

It should be noted that principles, features, aspects, and advantages of the method 200 as described above in connection with Fig. 2, are applicable also to the apparatus 300 described herein. In order to avoid undue repetition, reference is made to the above.

Figure 4 is a schematic illustration of an electronic device 400. The electronic device 400 is enabled for performing a perception task of its surrounding environment. The electronic device 400 may be any device which may perform a perception task. For example, the electronic device 400 may be a handheld or portable electronic device, such as a smartphone, tablet, headset, etc. Further, the electronic device 400 may be a stationary electronic device, such as a surveillance or entry system, a game console, or computer etc. Further, the electronic device 400 may be a robot such as industrial robots (e.g. in manufacturing or assembly lines), household robots, or any other type of robot. Further non-limiting examples where a perception task, as explained herein, may be utilized is systems for detecting if staff wears the right safety equipment in a production site, contactless checkouts e.g. by analyzing shopping carts in a store, inventory management, traffic analysis and monitoring (both of people and vehicles), parking occupancy, and in-car monitoring/Driver Monitoring System (DMS). As readily understood by the skilled person, the electronic device may be any suitable electronic device.

The electronic device 400 comprises an image capturing device 402. The image capturing device 402 is configured to capture an image depicting at least a portion of a surrounding environment of the electronic device 400. The image capturing device 402 may be a sensor system configured to acquire sensory data about the surrounding environment. The sensory system may comprise one or more cameras. The sensor system may comprise one or more LIDAR sensors and/or RADAR sensors.

The electronic device 400 further comprises an apparatus 300 for performing the perception task of the electronic device 400, such as the apparatus 300 as described above in connection with Fig. 3.

As is readily understood by the skilled person, the electronic device 400 may comprise additional systems/modules/apparatuses/devices for performing other functions and operations of the electronic device such as steering or maneuvering of the electronic device 400, or other control functions of the electronic device 400.

Figure 5 schematically illustrates a vehicle 500. The vehicle 500 is enabled for performing a perception task of its surrounding environment. The vehicle 500 may be any vehicle which may perform a perception task. In the illustrated example, the vehicle 500 represented as a vehicle 500 equipped with an Automated Driving System (ADS). More specifically, the vehicle 500 illustrated herein is a car. However, the vehicle may be any form of motorized vehicle, such as a land (or road) vehicle, a surface vessel, or an aircraft. As will become apparent from below, the vehicle 500 comprises an image data capturing device 402 and apparatus 300 as described above in connection Fig. 2 and 3.

The vehicle 500 comprises a number of elements which can be commonly found in autonomous vehicles. It will be understood that the vehicle 500 can have any combination of the various elements shown in Fig. 5. Moreover, the vehicle 500 may comprise further elements than those shown in Fig. 5. While the various elements is herein shown as located inside the vehicle 500, one or more of the elements can be located externally to the vehicle 500. For example, the map data may be stored in a remote server and accessed by the various components of the vehicle 500 via the communication system 526. Further, even though the various elements are herein depicted in a certain arrangement, the various elements may also be implemented in different arrangements, as readily understood by the skilled person. It should be further noted that the various elements may be communicatively connected to each other in any suitable way. The vehicle 500 of Fig. 5 should be seen merely as an illustrative example, as the elements of the vehicle 500 can be realized in several different ways.

The vehicle 500 comprises a control system 502. The control system 502 is configured to carry out overall control of functions and operations of the vehicle 500. The control system 502 comprises control circuitry 504 and a memory 506. The control circuitry 502 may physically comprise one single circuitry device. Alternatively, the control circuitry 502 may be distributed over several circuitry devices. As an example, the control system 502 may share its control circuitry 504 with other parts of the vehicle. The control circuitry 502 may comprise one or more processors, such as a central processing unit (CPU), microcontroller, or microprocessor. The one or more processors may be configured to execute program code stored in the memory 506, in order to carry out functions and operations of the vehicle 500. The processor(s) may be or include any number of hardware components for conducting data or signal processing or for executing computer code stored in the memory 506. The memory 506 optionally includes highspeed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 506 may include database components, object code components, script components, or any other type of information structure for supporting the various activities of the present description.

The apparatus 300 as described above in connection with Fig. 3 may share its control circuitry 302 with the control circuitry 504 of the vehicle 500. Thus, the apparatus 300 may be implemented as part of the control system 502 of the vehicle. Alternatively, the apparatus may be implemented as part of any other system or module of the vehicle 500 such as the ADS 510 or a perception module 514 of the ADS 510 as further described below. Alternatively, the apparatus 300 may be implemented as a separate module of the vehicle 500.

In the illustrated example, the memory 506 further stores map data 508. The map data 508 may for instance be used by the ADS 510 of the vehicle 500 in order to perform autonomous functions of the vehicle 500. The map data 508 may comprise high-definition (HD) map data. It is contemplated that the memory 506, even though illustrated as a separate element from the ADS 510, may be provided as an integral element of the ADS 510. In other words, according to some embodiments, any distributed or local memory device may be utilized in the realization of the present inventive concept. Similarly, the control circuitry 504 may be distributed e.g. such that one or more processors of the control circuitry 504 is provided as integral elements of the ADS 510 or any other system of the vehicle 500. In other words, according to some embodiments, any distributed or local control circuitry device may be utilized in the realization of the present inventive concept.

The ADS 510 is configured carry out the functions and operations of the autonomous functions of the vehicle 500. The ADS 510 may comprise a number of modules, where each module is tasked with different functions or features of the ADS 510. ADS features (may also be referred to as ADS functions) is a level 2 feature or higher according to SAE J3016 levels of driving automation for on-road vehicles. The ADS feature may for example be a traffic jam pilot, a highway pilot, or any other SAE J3016 level 3+ ADS feature. Some examples of modules of the ADS 510 is further described below.

The vehicle 500 further comprises a sensor system 520. The sensor system 520 is configured to acquire sensory data about the vehicle itself, or of its surroundings. The sensor system 520 may for example comprise a Global Navigation Satellite System (GNSS) module 522 (such as a GPS) configured to collect geographical position data of the vehicle 500. The sensor system 520 may further comprise one or more sensors 524. The sensor(s) 524 may be any type of onboard sensors, such as cameras, LIDARs, RADARs, ultrasonic sensors, gyroscopes, accelerometers, odometers, etc. It should be appreciated that the sensor system 520 may also provide the possibility to acquire sensory data directly or via dedicated sensor control circuitry in the vehicle 500. The image capturing device 402 may be part of the sensor system 520. In other words, the image capturing device 402 may be comprised by the sensor(s) 524.

The vehicle 500 further comprises a communication system 526. The communication system 526 is configured to communicate with external units, such as other vehicles (i.e. via vehicle-tovehicle (V2V) communication protocols), remote servers (e.g. cloud servers), databases, or other external devices, i.e. vehicle-to-infrastructure (V2I) or vehicle-to-everything (V2X) communication protocols. The communication system 526 may communicate using one or more communication technologies. The communication system 526 may comprise one or more antennas (not shown). Cellular communication technologies may be used for long range communication such as to remote servers or cloud computing systems. In addition, if the cellular communication technology used have low latency, it may also be used for V2V, V2I, or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 500 or with local infrastructure elements. ETSI is working on cellular standards for vehicle communication and for instance 5G is considered as a suitable solution due to the low latency and efficient handling of high bandwidths and communication channels.

The communication system 526 may accordingly provide the possibility to send output to a remote location (e.g. remote operator or control center) and/or to receive input from a remote location by means of the one or more antennas. Moreover, the communication system 526 may be further configured to allow the various elements of the vehicle 500 to communicate with each other. As an example, the communication system 526 may provide a local network setup, such as CAN bus, I2C, Ethernet, optical fibers, and so on. Local communication within the vehicle 500 may also be of a wireless type with protocols such as WiFi, LoRa, Zigbee, Bluetooth, or similar mid/short range technologies.

The vehicle 500 further comprises a maneuvering system 528. The maneuvering system 528 is configured to control the maneuvering of the vehicle 500. The maneuvering system 528 comprises a steering module 530 configured to control the heading of the vehicle 500. The maneuvering system 528 further comprises a throttle module 532 configured to control actuation of the throttle of the vehicle 500. The maneuvering system 528 further comprises a braking module 534 configured to control actuation of the brakes of the vehicle 500. The various modules of the maneuvering system 528 may also receive manual input from a driver of the vehicle 500 (i.e. from a steering wheel, a gas pedal and a brake pedal respectively). However, the maneuvering system 528 may be communicatively connected to the ADS 510 of the vehicle, to receive instructions on how the various modules of the maneuvering system 528 should act. Thus, the ADS 510 can control the maneuvering of the vehicle 500, for example via a decision and control module 518.

The ADS 510 may comprise a localization module 512 or localization block/system. The localization module 512 is configured to determine and/or monitor a geographical position and heading of the vehicle 500, and may utilize data from the sensor system 520, such as data from the GNSS module 522. Alternatively, or in combination, the localization module 512 may utilize data from the one or more sensors 524. The localization system may alternatively be realized as a Real Time Kinematics (RTK) GPS in order to improve accuracy. Geographical position of the ego-vehicle is in the present context to be construed as a map position (may also be referred to as in-map position) of the ego-vehicle. In other words, a geographical position or map position can be understood as a set (two or more) of coordinates in a global coordinate system.

The ADS 510 may further comprise a perception module 514 or perception block/system 514. The perception module 514 may refer to any commonly known module and/or functionality, e.g. comprised in one or more electronic control modules and/or nodes of the vehicle 500, adapted and/or configured to interpret sensory data - relevant for driving of the vehicle 500 - to identify e.g. obstacles, vehicle lanes, relevant signage, appropriate navigation paths, etc. The perception module 514 may thus be adapted to rely on and obtain inputs from multiple data sources, such as automotive imaging, image processing, computer vision, and/or in-car networking, etc., in combination with sensory data e.g. from the sensor system 520. The apparatus 300 for performing a perception task may be part of the perception module 514.

The localization module 512 and/or the perception module 514 may be communicatively connected to the sensor system 520 in order to receive sensory data from the sensor system 520. The localization module 512 and/or the perception module 514 may further transmit control instructions to the sensor system 520.

The ADS may further comprise a path planning module 516. The path planning module 516 is configured to determine a planned path of the vehicle 500 based on a perception and location of the vehicle as determined by the perception module 514 and the localization module 512 respectively. A planned path determined by the path planning module 516 may be sent to the maneuvering system 528 for execution.

The ADS may further comprise a decision and control module 518. The decision and control module 518 is configured to perform the control and make decisions of the ADS 510. For example, the decision and control module 518 may decide on whether the planned path determined by the path-planning module 516 should be executed or not.

Figures 6A to 6C illustrate, by way of example, three different ways of implementing ensemble networks for a number of subsequent time instances in accordance with some embodiments of the disclosed technology. As stated above, each time instance is associated with a different image depicting at least a portion of the surrounding environment of an electronic device or a vehicle at the corresponding time instance. Thus, the different time instances may correspond to a different frame captured by an image capturing device of the electronic device or of the vehicle. At each time instance, a different neural network (or subset of neural networks) may be used to give an output for a different image frame. Thus, each neural network (or subset of neural networks) gets a slightly different input. An advantage may be that a subsequent task, such as a tracking algorithm, will receive more independent information due to each neural network outputting slightly different results.

Figure 6A illustrates an example where the disclosed technology is performed over a first, second and third time instance, indicated by *t*_1 to t_3. It should be noted that the time instances are to be seen as an arbitrary set of three consecutive time instances which may be preceded and/or followed by any number of additional time instances. Thus, the wording "first", "second", and "third" should merely be seen as labels for ease of reference. The same holds for the numbering of the neural networks 1 to 3 and the different images 602a-c.

In the example of Fig. 6A, the ensemble network 604 (i.e. the plurality of neural networks) comprises three neural networks, Network 1, Network 2, and Network 3. However, the ensemble network 604 may comprise any number of neural networks.

For the first time instance *t*_1, a first image 602a is obtained. The first image 602a depicts a surrounding environment of the electronic device or the vehicle at the first time instance t_1. The first image 502a is then processed through one neural network of the ensemble network 604, in this case Network 1. A network output for the first time instance *t*_1 is thus obtained from Network 1. The network output of the first time instance *t*_1 can then be combined with network outputs for a number of preceding time instances to form a first aggregated network output 606a. The first aggregated network output 606a may then be used in a subsequent task 608.

The network output of the first time instance *t*_1 may in turn be used in a subsequent time instance, such as the second time instance *t*_2 to form a second aggregated network output 606b of the second time instance *t*_2. The network output of the first time instance *t*_1 may further be used in any number of subsequent time instances for forming aggregated network outputs of subsequent time.

Correspondingly, the same process may be repeated for the second time instance *t*_2. A second image 602b is obtained. The second image 602b depicts at least a portion of the surrounding environment at the second time instance *t*_2 and may thus be slightly different from the first image 602a. In the illustrated example, the images depicts a road of which a vehicle is travelling along. Thus, in a subsequent time instance, objects in the surrounding environment of the vehicle may have a different position relative to the vehicle in the second image 602b than in the first image 602a. The second image 602b is then processed through another neural network of the ensemble network 604, herein Network 2. A network output is thus obtained from Network 2, which can be used in determining a second aggregated network output 606b, together with network outputs of a number of preceding time instances, e.g. from the first time instance *t*_1 and/or any additional preceding time instances.

Again, the same process is repeated for the third time instance *t*_3 and a corresponding third image 602c, using yet another neural network, herein Network 3, to form a third aggregated network output 606c.

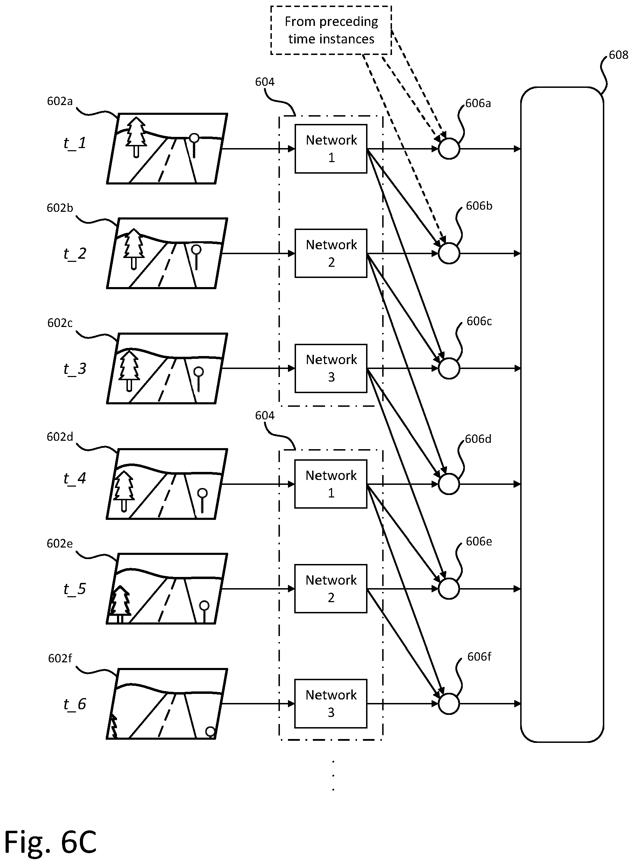

Once all neural networks of the ensemble network 604 has been used for a respective time instance, the neural networks may again be selected, as is further illustrated in Fig. 6C.

The dashed arrows indicates, by way of example, possible ways of forming the aggregated network outputs. It should however be noted that this may be done in several different ways. An aggregated network output may be formed of network outputs of all neural networks of the ensemble network 604. For example, if the ensemble network 604 comprises 10 neural networks, an aggregated network output may be formed of the network outputs of 10 consecutive time instances where each of the 10 neural networks has been used once. Alternatively, an aggregated network output may be formed of a batch of neural networks (i.e. any number of neural networks) of the ensemble network 604. For example, in the case of 10 neural networks, an aggregated network output may be formed by any number between 2 and 9 of the neural networks.

The example of Fig. 6A illustrates, in accordance with some embodiments, the case where only one neural network is used for processing each image. Each neural network may in this case be seen as a subset of neural network(s) of the plurality of neural networks where each subset consist of one neural network of the plurality of neural networks.

Fig. 6B illustrates an example where more than one neural network of the ensemble network 604 may be used for each time instance. The principles of the process of Fig. 6B is in many ways the same as in Fig. 6A. In order to avoid undue repetition, only the differences will be discussed in the following.

In Fig. 6B, the ensemble network 604' comprises N different neural networks. Compared to Fig. 6A, the images of each time instance may be processed by means of subsets of neural networks of the ensemble network 604' which may comprise more than one neural network. As an example, the first image 602a of the first time instance *t*_1 is processed by a first subset 603a of neural networks. The first subset 603a herein comprises 2 neural networks. The second image 602b is processed by a second subset 603b of neural networks. The second subset 603b herein comprises 1 neural network. The third image 602c is processed by a third subset 603c. The third subset 603c herein comprises 3 neural networks. However, the subsets may comprise any number of neural networks.

The subsets of neural networks may comprise any number of neural networks of the ensemble network 604'. Further, the subsets may comprise different numbers of neural networks as illustrated herein. However, the subsets may comprise the same number of neural networks. As an example, an ensemble network comprising 10 neural networks may be split into five different subsets, where each subset comprises two neural networks. As another example, the ensemble network may be split into a first subset comprising 3 neural networks, a second subset comprising 3 neural networks and a third subset comprising 4 neural networks. Further, two subsets may have one or more common neural networks, but not all.

As has been described above, the network output of each subset of neural networks may be an aggregated sub-network output of the neural networks of the subset. Thus, the aggregated network output for each time instance may be formed by combining one output from each subset of neural networks used in determining the aggregated network output. Alternatively, the network output of each subset of neural networks may comprise the individual network outputs of the neural networks of the subset. Thus, each subset of neural networks may contribute with several network outputs when determining the aggregated network output.

Fig. 6C schematically illustrates the process described above over two iterations of the ensemble network 604. For illustrative purposes only, the ensemble network 604 herein comprises three different neural networks, Network 1, Network 2, and Network 3, and only one neural network is used in for each time instance. The process is herein illustrated over six consecutive time instances, *t*_1 to *t*_6. The process over the first, second, and third time instances are more or less analogous to what is described in connection with Fig. 6A. To avoid undue repetition, reference is made to the above. The same holds for the process over the fourth, fifth and sixth time instances.

As illustrated in Fig. 6C, each neural network of the ensemble network 604 is used for a respective first, second and third image 602a, 602b, 602c. Then, starting from the fourth time instance *t*_4 (and thus the fourth image 602d), the rotation over the ensemble network 604 is repeated over the next three time instances (i.e. for the fourth, fifth, and sixth images 602d, 602e, 602f). As seen in the presently illustrated example, the rotation over the neural networks of the ensemble network 604 are performed in the same order each time. Further, each aggregated network output is determined by combining the network output of a current time instance with the network outputs of the two preceding time instances. Thus, each aggregated network outputs 606a-f are formed of network outputs of one instance of each neural network of the ensemble network 604.

It should however be noted that the rotation over the ensemble network 604 (i.e. which order the individual neural networks are used) may be different. For example, the neural network used for a time instance may be selected at random.

The present invention has been presented above with reference to specific embodiments. However, other embodiments than the above described are possible and within the scope of the invention. Different method steps than those described above, performing the method by hardware or software, may be provided within the scope of the invention. Thus, according to some embodiments, there is provided a non-transitory computer-readable storage medium storing one or more programs configured to be executed by one or more processors (e.g. of an apparatus, a vehicle control system or an electronic device), the one or more programs comprising instructions for performing the method according to any one of the above-discussed embodiments. Alternatively, according to some other embodiments a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

It should be noted that any reference signs do not limit the scope of the claims, that the disclosed technology may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the inventive concept. Likewise, software implementations could be accomplished with standard programming techniques with rule-based logic and other logic to accomplish the various steps. The above mentioned and described embodiments are only given as examples and should not be limiting to the present inventive concept. Other solutions, uses, objectives, and functions within the scope of the inventive concept as claimed in the below described patent claims should be apparent for the person skilled in the art.

The neural networks (may also be referred to as machine learning models, machine-learning algorithms, deep neural networks, and so forth) referred to throughout the present disclosure are implemented, in some embodiments, using publicly available suitable software development machine learning code elements, for example, such as those which are available in Python, Keras and TensorFlow or in any other suitable software development platform, in any manner known to be suitable to someone of ordinary skill in the art.

## Claims

1. A computer-implemented method (200) for performing a perception task, of an electronic device or a vehicle, using a plurality of neural networks trained to generate a perception output based on an input image, wherein at least two neural networks of the plurality of neural networks are different from each other, the computer-implemented method (200) comprising:
for a time instance of a plurality of consecutive time instances:
obtaining (S202) an image depicting at least a portion of a surrounding environment of the electronic device or the vehicle at the time instance;
processing (S204) the image associated with the time instance by means of a subset of neural network(s) of the plurality of neural networks, thereby obtaining a network output for the time instance; and
determining (S206) an aggregated network output by combining (S208) the obtained network output for the time instance with network outputs obtained for a number of preceding time instances, wherein the obtained network output for the time instance and the network outputs obtained for the number of preceding time instances are obtained from different subsets of neural networks of the plurality of neural networks.

2. The method (200) according to claim 1, wherein the neural networks of the plurality of neural networks are trained differently from each other.

3. The method (200) according to claim 1 or 2, wherein the neural networks of the plurality of neural networks have a same network architecture.

4. The method (200) according to any of the claims 1 - 3, wherein the perception task is any one of an object detection task, an object classification task, an image classification task, an object recognition task, a free-space estimation task, an object-tracking task and an image segmentation task.

5. The method (200) according to any one of claims 1 - 4, wherein the subset of neural network(s) of the plurality of neural networks consists of one neural network of the plurality of neural networks.

6. The method (200) according to any one of claims 1 - 4, wherein the subset of neural network(s) of the plurality of neural networks comprises two or more neural networks of the plurality of neural networks.

7. The method (200) according to claim 6, wherein the network output of the subset of neural network(s) is an aggregated sub-network output of the two or more neural network(s) of the set of neural network(s).

8. The method (200) according to any one of claims 1 - 7, wherein the number of preceding time instances is based on a number of neural networks of the plurality of neural networks or a number of subsets of neural network(s) of the plurality of neural networks.

9. The method (200) according to any one of claims 1 - 8, wherein the aggregated network output is an average of the obtained network output for the time instance and the network outputs obtained for the number of preceding time instances.

10. The method (200) according to any one of claims 1 - 9, wherein the aggregated network output is a weighted average of the obtained network output for the time instance and the network outputs obtained for the number of preceding time instances.

11. The method (200) according to any one of claims 1 - 10, wherein combining (S208) the obtained network output for the time instance with the network outputs obtained for the number of preceding time instances comprises:
feeding (S210) the obtained network output for the time instance and the network outputs obtained from the number of preceding time instances into a machine learning model configured to output the aggregated network output.

12. A computer program product comprising instructions which, when the program is executed by a computing device, causes the computer to carry out the method (200) according to any one of claims 1 - 11.

13. An apparatus (300) for performing a perception task, of an electronic device or a vehicle, using a plurality of neural networks trained to generate a perception output based on an input image, wherein at least two neural network of the plurality of neural networks are different from each other, the apparatus (300) comprising control circuitry (302) configured to, for a time instance of a plurality of consecutive time instances:
obtain an image depicting at least a portion of a surrounding environment of the electronic device or the vehicle at the time instance;
process the image associated with the time instance by means of a subset of neural network(s) of the plurality of neural networks, thereby obtaining a network output for the time instance; and
determine an aggregated network output by combining the obtained network output for the time instance with network outputs obtained for a number of preceding time instances, wherein the obtained network output for the time instance and the network outputs obtained for the number of preceding time instances are obtained from different subsets of neural networks of the plurality of neural networks.

14. An electronic device (400) comprising:
an image capturing device (402) configured to capture an image depicting at least a portion of a surrounding environment of the electronic device (400); and
an apparatus (300) according to claim 13, for performing a perception task of the electronic device (400).

15. A vehicle (500) comprising:
an image capturing device (402) configured to capture an image depicting at least a portion of a surrounding environment of the vehicle (500); and
an apparatus (300) according to claim 13, for performing a perception task of the vehicle (500).
